Europäisches Patentamt

European Patent Office

Office européen des brevets

(11) Veröffentlichungsnummer: **0 446 692 A1**

# (12) EUROPÄISCHE PATENTANMELDUNG

(21) Anmeldenummer: 91102692.0

(22) Anmeldetag: 23.02.91

(51) Int. Cl.⁵: **F21V 8/00**

(30) Priorität: 15.03.90 DE 4008208

(43) Veröffentlichungstag der Anmeldung:
**18.09.91 Patentblatt 91/38**

(84) Benannte Vertragsstaaten:
**AT BE CH DE DK ES FR GB GR IT LI LU NL SE**

(71) Anmelder: **ETA INGENIEURGESELLSCHAFT FÜR ENERGIETECHNIK UND ENERGIEANWENDUNG MBH**
**Bahnhofstrasse 16a**
**W-5340 Bad Honnef 1(DE)**

(72) Erfinder: **Eming, Winfried, Dipl.-Ing.**
**Virnebergstrasse 25**
**W-5342 Rheinbreitbach(DE)**
Erfinder: **Rühl, Klaus, Dipl.-Ing.**
**Werrestrasse 5**
**W-4900 Herford(DE)**

(74) Vertreter: **Schwarz, Klaus-Jürgen, Dipl.-Ing.**
**Gluckstrasse 7**
**W-5300 Bonn 1(DE)**

(54) Beleuchtungsvorrichtung mit Lichtleitern, insbesondere für Kühlräume und explosionsgeschützte Räume.

(57) Nach den entsprechenden Richtlinien und Vorschriften geht bei solchen in Tiefkühlräumen installierten Beleuchtungseinrichtungen deren gesamte installierte Leistung in die Kühllastberechnung ein, was bedeutet, daß zusätzlich zu der für die Kälteerzeugung notwendigen Kühlleistung die 1,5-bis 2-fache elektrische Energie zur Vernichtung der thermischen Energie aufgebracht werden muß, um die von den Beleuchtungskörpern abgegebene Wärme zu kompensieren. Dies wird jetzt dadurch vermieden, daß die Lichtquellen (2) außerhalb des Betriebsraumes (3) an den stirnseitigen Enden von in den Betriebsraum (3) führenden Lichtträgern (4), die den eingespeisten Lichtstrom im Betriebsraum (3) seitlich zu ihrer Längserstreckung abstrahlen, isoliert angeordnet sind. Hierbei können als Lichtträger geeignete Materialien, wie Glas, Kunststoff und dergleichen eingesetzt werden, wobei physikalisch der sonst unvermeidbare gleichzeitige Effekt der Wärmeübertragung an den Betriebsraum (3) weitestgehend vermieden wird.

FIG.2

EP 0 446 692 A1

Die Erfindung betrifft eine Beleuchtungseinrichtung, insbesondere für Tiefkühlräume, Kühlhäuser, Freezer-Shops, explosionsgeschützte Räume und dergleichen, bei der Licht mindestens einer Lichtquelle von einer optischen Vorrichtung gebündelt und auf das stirnseitige Ende eines Lichtträgers abgestrahlt wird, und bei der die Lichtquelle außerhalb des Betriebsraumes angeordnet ist.

In Selbstbedienungs-Warenhäusern werden allgemein Kühlhäuser bzw. Kühlräume zur Aufbewahrung von Lebensmitteln sowie Tiefkühlschränke, Tiefkühlsets und sogenannte Freezer-Shops zur Warenpräsentation benutzt. Tiefkühlschränke und Tiefkühlsets werden allgemein als geschlossene Tiefkühlmöbel bezeichnet, während Freezer-Shops aus solchen Tiefkühlmöbeln zu einer Tiefkühlanordnung zusammengesetzt sind, die einen Innenraum umschließt, von dem her die einzelnen Tiefkühlsets mit neuer Ware beschickt werden können, und von deren Außenseite die einzelnen Tiefkühlsets oder Tiefkühlschränke für die Kunden zugänglich sind, um die darin präsentierten Waren entnehmen zu können. Die Beleuchtung solcher Tiefkühleinrichtungen besteht üblicherweise aus normalen Leuchtstoffröhren mit Vorschaltgeräten. Da die Innentemperatur dieser Tiefkühleinrichtungen üblicherweise etwa - 22° C bzw. 251 K beträgt, können die Beleuchtungseinrichtungen normalerweise nachts nicht abgeschaltet werden, da die Leuchtstoffröhren morgens wegen der niedrigen Temperaturen nicht wieder einwandfrei starten.

Nach den entsprechenden VDI-Richtlinien und DIN-Vorschriften geht bei solchen in Tiefkühlräumen installierten Beleuchtungskörpern deren gesamte installierte Leistung in die Kühllastberechnung ein, was bedeutet, daß zusätzlich zu der für die Kälteerzeugung notwendigen Kühlleistung die 1,5- bis 2-fache elektrische Energie zur Vernichtung der thermischen Energie aufgebracht werden muß, um die von den Beleuchtungskörpern abgegebene Wärme zu kompensieren.

In anderen, gefährdeten Räumen, in denen sich die Installation von elektrischen Anlagen, Leitungen, Schaltelementen und dergleichen von vornherein verbietet oder in denen eine Wärmeentwicklung unerwünscht ist, wie z.B. in Spritzkabinen, Digestorien für die chemische Industrie, Bäder und allgemein sanitäre Einrichtungen, explosionsgeschützte Räume und dergleichen, ist ein Einsatz von elektrischen Beleuchtungseinrichtungen nicht möglich.

Aus der DE-PS 24 23 274 ist eine Beleuchtungseinrichtung bekannt, bei der das Licht einer Lichtquelle auf das stirnseitige Ende eines Lichtleiters fokussiert wird. Der Lichtleiter transportiert den Lichtstrom weiter bis zu einer Lichtaustrittsstelle. Dadurch wird es möglich, die Lichtquelle und die Lichtaustrittsstelle in verschiedenen Räumen anzuordnen. Nachteil dieser Beleuchtungseinrichtung ist, daß das Licht nur in einem eng begrenzten Winkel senkrecht zur optischen Achse abgestrahlt wird, daß der Lichtleiter aus einem unbiegsamen, starren Rohr besteht, das mit einem komprimierten Gas gefüllt ist, und daß zwischen Lichtquelle und Lichtleiter keine Wärmeisolierung besteht. Ein Einsatz dieser Beleuchtungseinrichtung in Kühlräumen oder in explosionsgeschützten Räumen ist nicht möglich.

Der Erfindung liegt die Aufgabe zugrunde, die Beleuchtungseinrichtungen insbesondere für Tiefkühlräume, Kühlhäuser, Freezer-Shops, explosionsgeschützte Räume und dergleichen zur Einsparung von Energie so auszubilden, daß die von den Lichtquellen der Beleuchtungseinrichtungen abgegebene Wärme nicht noch zusätzlich durch die für die Kühlung dieser Tiefkühleinrichtungen ohnehin notwendige Energie kompensiert werden muß.

Diese Aufgabe wird gemäß der Erfindung bei einer Beleuchtungseinrichtung nach dem Oberbegriff des Anspruches 1 dadurch gelöst, daß die in den Betriebsraum führenden Lichtträger stabförmig aus Glas oder Kunststoff ausgebildet sind und den eingespeisten Lichtstrom radial abstrahlen, und daß zwischen den Lichtträgern und der Lichtquelle eine Wärmeisolierung angeordnet ist.

Durch die Erfindung ergibt sich der Vorteil, daß als Lichtträger geeignete Materialien, wie Glas, Glasfaser, Acryle oder andere Kunststoffe eingesetzt werden können, wobei physikalisch der sonst unvermeidbare gleichzeitige Effekt der Wärmeübertragung in den Betriebsraum weitestgehend vermieden wird und keine elektrischen Leitungen oder Geräte mehr im Betriebsraum installiert werden müssen. Letzteres ist besonders vorteilhaft bei Digestorien oder explosionsgeschützten Räumen.

Besonders vorteilhafte Weiterbildungen der Erfindung sind in den Ansprüchen 2 bis 18 gekennzeichnet. So können die verwendeten Lichtträger die unterschiedlichsten geometrischen Formen haben, wie die eines Zylinders, Quaders, Kegels, einer Pyramide usw., wobei jeweils ein oder eine Vielzahl derartiger Lichtträger die besagte Funktion übernehmen kann. Auch Kombinationen mit flexiblen Trägern sind möglich ebenso wie die Anordnung einer biegsamen Lichtoptik aus flexiblem Material zur Lichtleitung zwischen Lichtquelle und Lichtträger.

Die eigentliche Lichterzeugung entspricht dem gegenwärtigen Stande der Technik und kann nach wie vor durch Leuchtstoffröhren, Halogenstrahler oder dergleichen erfolgen. Im vorliegenden Falle sollen jedoch vorzugsweise Halogenstrahler mit speziell angepaßten Parabolspiegeln verwendet werden, die eine optimale Einkoppelung der parallelen Lichtstrahlen in die verwendeten Lichtträger gewährleisten.

Das Auskoppeln der Lichtenergie aus dem Lichtträger kann entweder durch axiale und/oder radiale Nuten oder Einschnitte, planparallele Anschnitte oder Anfasungen und/oder stellenweise Aufrauhungen und/oder Beschichtungen der Oberfläche und in ähnlicher geeigneter Weise erfolgen, ferner durch Einschlüsse von Luft- und/oder Gasblasen oder auch sonstigen eingefärbten oder reflektierenden Medien, wie Metallflitter oder dergleichen, und/oder Totaleinfärbung der verwendeten Lichtträger, auch mit fluoreszierenden Eigenschaften. Auch eine Kombination mehrerer dieser vorgenannten Maßnahmen ist möglich.

Die Isolierung der Lichtquelle vom Betriebsraum hat den Vorteil, daß die von der Lichtquelle erzeugte Wärme nicht in den Kühlraum gelangt und somit auch keine Energie mehr aufgewendet werden muß, um diese Wärme wieder herunterzukühlen. Bei explosionsgeschützten Räumen ist durch den Wegfall der Wärmequelle und der elektrischen Zuleitungen auch eine Gefahrenquelle eliminiert worden. Die von der Lichtquelle erzeugte Wärme wird durch natürliche Konvektion oder durch ein Gebläse abtransportiert. Durch an der Stirnseite des Lichtträgers angebrachte Isolierglasscheiben kann ein zusätzlicher Isoliereffekt erzielt werden.

Solche Beleuchtungseinrichtungen können mit Vorteil auch für Räume und Aggregate eingesetzt werden, die für die Lagerung, Herstellung und/oder Verarbeitung von Gefahrgut bestimmt sind und in denen sich daher die Installation von elektrischen Anlagen, Leitungen, Schaltelementen usw. von vornherein verbietet. Dies können Spritzkabinen, Digestorien für die chemische Industrie, Bäder und Einrichtungen ganz allgemeiner Art im sanitären Bereich ebenso wie allgemein explosionsgeschützte Räume und ähnliche Einrichtungen sein. Die Beleuchtungseinrichtungen können aber auch für Treppengeländer, Dekorationseinrichtungen ebenso wie als trittfeste Notbeleuchtung an Treppenstufen und ähnlichen Einrichtungen verwendet werden.

Bevorzugte Ausführungsbeispiele der Erfindung sind in der Zeichnung schematisch dargestellt. Es zeigen

Fig. 1 einen schematischen senkrechten Schnitt durch einen Tiefkühlschrank oder einen Tiefkühlraum mit Beleuchtungseinrichtung,

Fig. 2 eine demgegenüber vergrößerte, teilweise geschnittene Darstellung von Einzelheiten einer derartigen Beleuchtungseinrichtung im Bereich der Durchführung des Lichtträgers durch die Deckenkonstruktion des Tiefkühlschrankes oder dergleichen,

Fig. 3 eine gegenüber Fig. 2 abgewandelte Ausführungsform einer solchen Beleuchtungseinrichtung,

Fig. 4 noch eine weitere abgewandelte Ausführungsform der Beleuchtungseinrichtung,

Fig. 5 eine weitere abgewandelte Ausführungsform einer solchen Beleuchtungseinrichtung und

Fig. 6 bis 9 verschiedene Ausbildungsformen von Lichtträgern für solche Beleuchtungseinrichtungen.

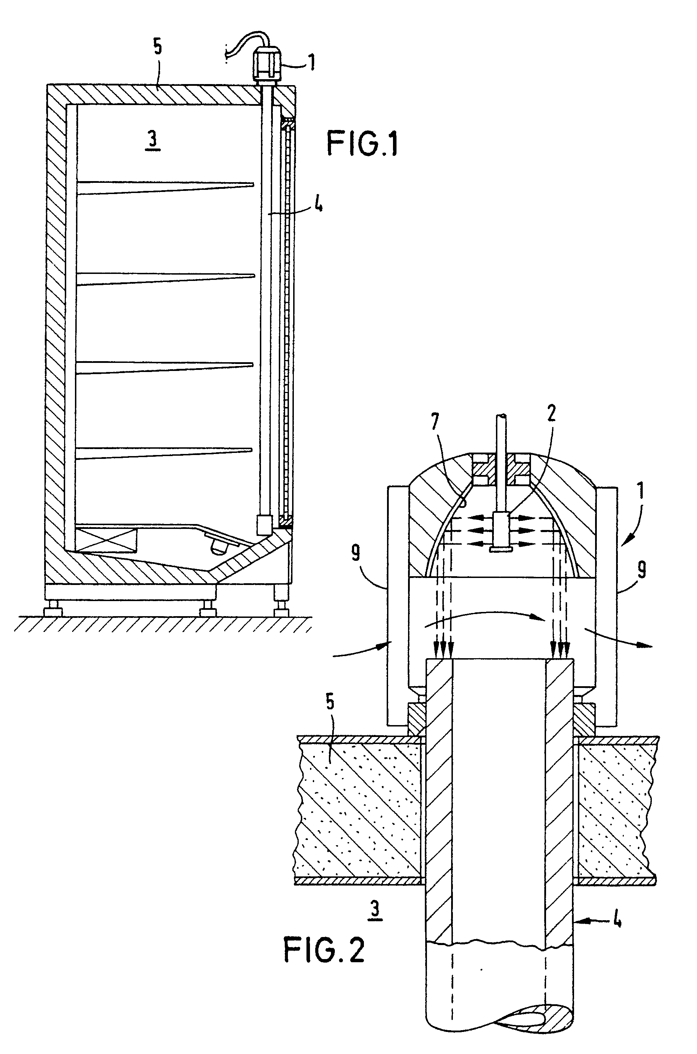

Wie in Fig. 1 und 2 zu erkennen ist, ist die Beleuchtungseinrichtung 1 für Tiefkühlräume, Kühlhäuser, Freezer-Shops, explosionsgeschützte Räume und dergleichen so ausgebildet, daß die Lichtquelle 2 außerhalb des Betriebsraumes 3 an den stirnseitigen Enden von in den Betriebsraum 3 führenden Lichtträgern 4 isoliert angeordnet ist, wobei die Lichtträger 4 so ausgebildet sind, daß sie den von der Lichtquelle 2 eingespeisten Lichtstrom im Betriebsraum 3 seitlich zu ihrer Längserstreckung und über ihren gesamten Umfang abstrahlen.

Die Lichtträger 4, die durch die Decke 5 des Betriebsraumes 3 abgedichtet hindurchgeführt sind, können, wie in Fig. 6 bis 9 im einzelnen gezeigt ist, als Lichtstäbe und/oder Lichtrohre aus Glas oder Kunststoff ausgebildet sein und eine derart unterschiedliche Länge haben, daß jeweils Teile des Lichtstromes entsprechend der unterschiedlichen Länge der zusammengehörenden Lichtträger in den umgebenden Kühlraum 3 zur Seite abgestrahlt werden.

Die Lichtstäbe der Lichtträger 4 können einen kreissektorförmigen, dreieckigen, viereckigen, quadratischen oder in beliebiger Weise mehreckigen Querschnitt haben und mit jeweils einer Seitenfläche an einem benachbarten Lichtstab anliegen, wie dies in Fig. 6, 7 und 8 gezeigt ist.

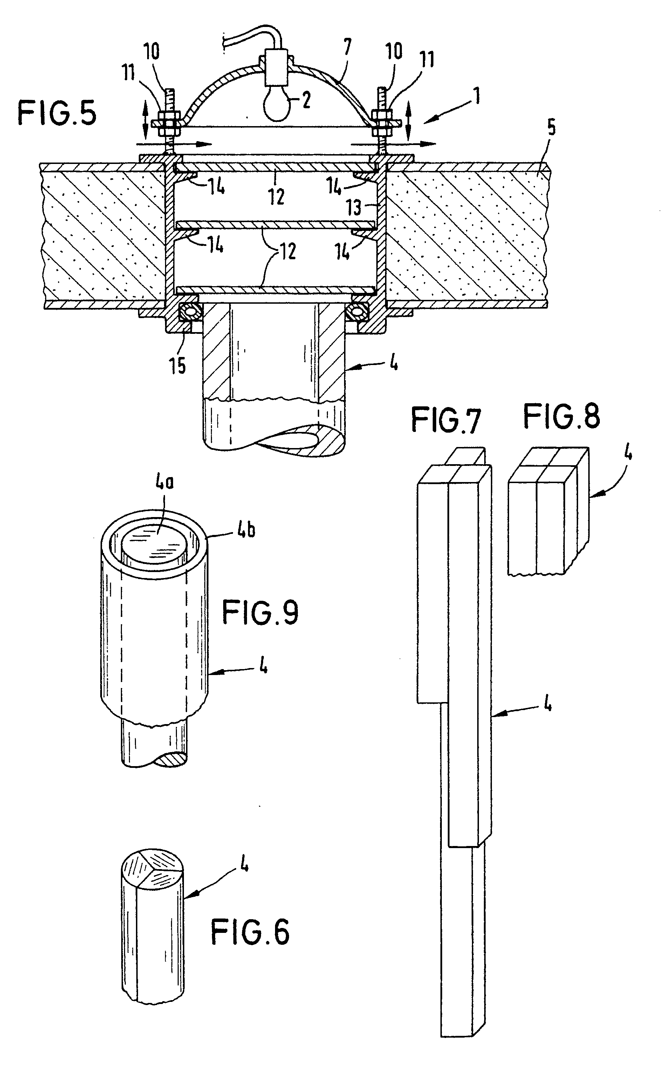

Die Lichtträger 4 können jedoch auch einen kreisförmigen Querschnitt haben und aus einem zentralen Lichtstab 4a und einem oder mehreren konzentrisch dazu angeordneten rohrförmigen Lichtträgern 4b unterschiedlicher Länge mit einer ringförmigen oder zylindrischen Lichtleitfläche bestehen, wie dies insbesondere in Fig. 9 gezeigt ist.

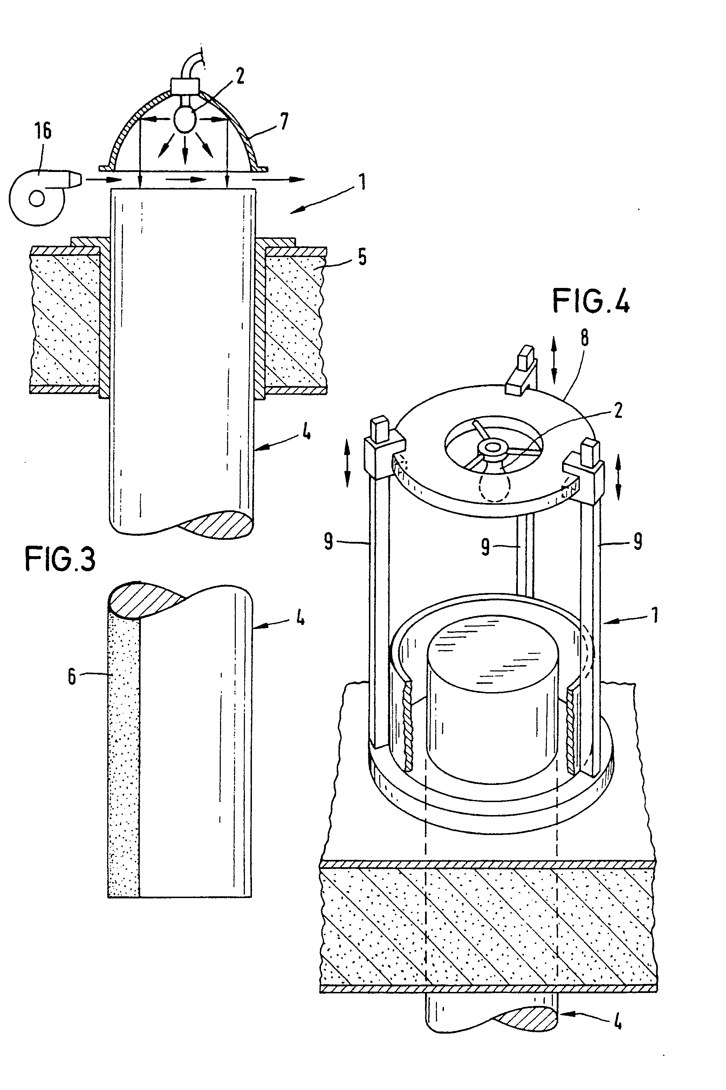

Bei allen gezeigten Ausführungsformen können der oder die Lichtträger 4 axiale und/oder radiale Nuten oder Einschnitte, planparallele Anschnitte oder Anfasungen und/oder stellenweise Aufrauhungen und/oder Beschichtungen 6 (Fig. 3) der Oberfläche ebenso wie Einschlüsse von Luft- und/oder Gasblasen oder auch sonstigen eingefärbten oder reflektierenden Medien, wie Metallflitter oder dergleichen, und/oder eine Totaleinfärbung für das Auskoppeln der Lichtenergie aus dem Lichtträger 4 aufweisen. Durch Auswahl des Materials des Lichtträgers 4, der Helligkeit der Lichtquelle 2 und der Fläche des Lichtleiters, über die der Lichtstrom geleitet und abgegeben wird, kann so für jeden Verwendungszweck ein Optimum an Energieeinsparung erreicht werden.

Zur Erhöhung der Lichtleistung weist die Lichtquelle 2 einen den Lichtstrom gegen das stirnseitige Ende des oder der Lichtträger 4 abstrahlenden Reflektor 7 auf, der, wie insbesondere in Fig. 4 und 5 gezeigt ist, zweckmäßig in einem nach Bedarf veränderbaren Abstand von dem stirnseitigen Ende des oder der Lichtträger 4 angeordnet sein kann. Bei der Ausführungsform von Fig. 4 ist ein ringförmiger Träger 8 für die Lichtquelle 2 an mehreren parallel zur Längserstreckung des stabförmigen Lichtträgers 4 aufragenden Stützstreben 9 verschiebbar angeordnet, wobei lediglich zur besseren Übersichtlichkeit der an dem Tragring 8 angeordnete Reflektor nicht dargestellt worden ist.

Eine solche verschiebbare Anordnung des Reflektors 7 ist auch bei der Ausführungsform von Fig. 5 vorhanden, wobei der Reflektor 7 beispielsweise an parallel aufragenden Gewindestäben 10 mittels geeigneter Stellschrauben 11 in einem unterschiedlichen Abstand von dem stirnseitigen Ende des oder der Lichtträger 4 festgelegt werden kann.

Die Lichtquelle 2 kann eine Leuchtstoffröhre, ein Halogenstrahler oder dergleichen sein, und der Reflektor 7 kann zweckmäßig ein der Lichtquelle angepaßter Parabolspiegel, ein Umlenkspiegel, ein Linsensystem oder Optik sein.

Während bei den Ausführungsformen von Fig. 2 bis 4 der oder die Lichtträger 4 mit ihrem stirnseitigen Ende über die Decke 5 des Betriebsraumes 3 oder des Tiefkühlgerätes nach oben hervorstehen und in der Deckendurchführung abgedichtet sind, sind bei der Ausführungsform von Fig. 5 die Lichtquelle 2 und deren Reflektor 7 durch eine oder mehrere Isolierglasscheiben 12 von dem stirnseitigen Ende des Lichtträgers 4 getrennt, wobei diese Isolierglasscheiben 12 in einem rohrförmigen Träger 13 angeordnet sein können, der in der Deckendurchführung des Betriebsraumes 3 oder des Tiefkühlgerätes angeordnet ist und entsprechende Auflager 14 für die Isolierglasscheiben 12 sowie einen unteren Haltering 15 für das Ende des oder der Lichtträger 4 aufweist.

Außerdem können bei dieser Ausführungsform auch die Gewindestäbe 10 für die verstellbare Halterung des Reflektors 7 mit dem Träger 13 einstükkig ausgebildet sein.

Bei allen gezeigten Ausführungsformen ist die Lichtquelle 2 mit Reflektor 7 in einem solchen Abstand von dem stirnseitigen Ende des oder der Lichtträger 4 angeordnet, daß die von der Lichtquelle 2 erzeugte Wärme entweder durch einen natürlichen Luftzug, durch eine Zwangslüftung mittels Gebläse oder Belüftungseinrichtung 16 (Fig. 3) oder dergleichen abgeführt wird.

## Patentansprüche

1. Beleuchtungseinrichtung, insbesondere für Tiefkühlräume, Kühlhäuser, Freezer-Shops, explosionsgeschützte Räume und dergleichen, bei der Licht mindestens einer Lichtquelle von einer optischen Vorrichtung gebündelt und auf das stirnseitige Ende eines Lichtträgers abgestrahlt wird, und bei der die Lichtquelle außerhalb des Betriebsraumes angeordnet ist, **dadurch gekennzeichnet,** daß die in den Betriebsraum (3) führenden Lichtträger (4) stabförmig aus Glas oder Kunststoff ausgebildet sind und den eingespeisten Lichtstrom radial abstrahlen, und daß zwischen den Lichtträgern (4) und der Lichtquelle (2) eine Wärmeisolierung angeordnet ist.

2. Beleuchtungseinrichtung nach Anspruch 1, **dadurch gekennzeichnet,** daß die Lichtträger (4) axiale und/oder radiale Nuten oder Einschnitte für das seitliche Auskoppeln des Lichtstroms aus dem Lichtträger (4) aufweisen.

3. Beleuchtungseinrichtung nach Anspruch 1 oder 2, **dadurch gekennzeichnet,** daß die Lichtträger (4) aus Lichtstäben unterschiedlicher Länge bestehen.

4. Beleuchtungseinrichtung nach einem der Ansprüche 1 bis 3, **dadurch gekennzeichnet,** daß die Lichtstäbe der Lichtträger (4) einen kreissektorförmigen, dreieckigen oder mehreckigen Querschnitt haben.

5. Beleuchtungseinrichtung nach einem der Ansprüche 1 bis 4, **dadurch gekennzeichnet,** daß die Lichtträger (4) einen kreisförmigen Querschnitt haben und aus einem zentralen Lichtstab (4a) und einem oder mehreren konzentrisch dazu angeordneten rohrförmigen Lichtträgern (4b) unterschiedlicher Länge bestehen.

6. Beleuchtungseinrichtung nach einem der Ansprüche 1 bis 5, **dadurch gekennzeichnet,** daß die Lichtträger (4) zumindest stellenweise Aufrauhungen der Oberfläche für das seitliche Auskoppeln des Lichtstroms aus dem Lichtträger (4) aufweisen.

7. Beleuchungseinrichtung nach einem der Ansprüche 1 bis 6, **dadurch gekennzeichnet,** daß die Lichtträger (4) Beschichtungen (6) der Oberfläche für das seitliche Auskoppeln des Lichtstroms aus dem Lichtträger (4) aufweisen.

8. Beleuchtungseinrichtung nach einem der Ansprüche 1 bis 7, **dadurch gekennzeichnet,** daß ein Reflektor (7) das Licht der Lichtquelle (2) bündelt und auf das stirnseitige Ende des Lichtträgers (4) abstrahlt.

9. Beleuchtungseinrichtung nach Anspruch 8, **dadurch gekennzeichnet,** daß der Reflektor (7) der Lichtquelle (2) in einem nach Bedarf veränderbaren Abstand von dem stirnseitigen Ende des oder der Lichtträger (4) angeordnet ist.

10. Beleuchtungseinrichtung nach Anspruch 8 oder 9, **dadurch gekennzeichnet,** daß die Lichtquelle (2) eine Leuchtstoffröhre, ein Halogenstrahler oder dergleichen ist.

11. Beleuchtungseinrichtung nach den Ansprüchen 1 bis 10, **dadurch gekennzeichnet,** daß der Reflektor (7) ein der Lichtquelle (2) angepaßter Parabolspiegel ist.

12. Beleuchtungseinrichtung nach einem der Ansprüche 1 bis 11, **dadurch gekennzeichnet,** daß zwischen der Lichtquelle (2) und den Lichtträgern (4) eine oder mehrere Isolierglasscheiben (12) angeordnet sind.

13. Beleuchtungseinrichtung nach einem der Ansprüche 1 bis 12, **dadurch gekennzeichnet,** daß zwischen Lichtquelle (2) und Lichtträger (4) eine biegsame Lichtoptik aus flexiblem Material angeordnet ist.

14. Beleuchtungseinrichtung nach einem der Ansprüche 1 bis 13, **dadurch gekennzeichnet,** daß eine Belüftungseinrichtung ein wärmeisolierendes Luftpolster zwischen Lichtquelle (2) und Lichtträger (4) aufbaut.

15. Beleuchtungseinrichtung nach einem der Ansprüche 1 bis 13, **dadurch gekennzeichnet,** daß die Lichtquelle (2) und der Lichtträger (4) derart angeordnet sind, daß durch natürliche Konvektion ein wärmeisolierendes Luftpolster aufgebaut wird.

16. Beleuchtungseinrichtung nach einem der Anspüche 1 bis 15, **dadurch gekennzeichnet,** daß die Lichtträger (4) Einschlüsse von Luft- und/oder Gasblasen für das seitliche Auskoppeln des Lichtstroms aus dem Lichtträger (4) aufweisen.

17. Beleuchtungseinrichtung nach einem der Ansprüche 1 bis 16, **dadurch gekennzeichnet,** daß die Lichtträger (4) Einschlüsse von eingefärbten oder reflektierenden Medien, wie Metallflitter oder dergleichen, und/oder eine Totaleinfärbung für das seitliche Auskoppeln des Lichtstromes aus dem Lichtträger (4) aufweisen.

18. Beleuchtungseinrichtung nach einem der Ansprüche 1 bis 17, **dadurch gekennzeichnet,** daß die Lichtträger (4) planparallele Anschnitte oder Anfasungen für das seitliche Auskoppeln des Lichtstromes aus dem Lichtträger (4) aufweisen.

FIG.1

FIG.2

6

FIG.3

FIG.4

FIG.5

FIG.7   FIG.8

FIG.9

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 480 178 (ZINBERG)<br>* das ganze Dokument * | 1-3,8,11 | F 21 V 8/00 |
| P,Y | EP-A-0 388 128 (LESS LIGHTING LTD.)<br>* Seite 2, Zeilen 1 - 16 * * Seite 3, Zeilen 15 - 19; Figuren 1, 3 * | 1,8,10,12 | |
| Y | EP-A-0 331 064 (EURATOM)<br>* Spalte 2, Zeilen 29 - 50; Figur 2 * | 1,8,10,12 | |
| A | US-A-3 441 957 (FRIEDMAN)<br>* Spalte 4, Zeile 19 - Spalte 6, Zeile 9; Figuren 1, 2 * | 1,8, 10-12,14, 15 | |
| A | US-A-4 420 740 (BROWN ET AL)<br>* Spalte 3, Zeilen 37 - 58; Figuren 4, 7-8 * | 2,5,18 | |
| A | FR-A-2 593 585 (KEI MORI)<br>* Seite 5, Zeilen 7 - 22; Figur 2 * | 4 | |
| A | US-A-4 561 043 (THOMPSON)<br>* Spalte 4, Zeilen 8 - 19; Figuren 3b, 3c * | 6,7 | RECHERCHIERTE SACHGEBIETE (Int. Cl.5) |
| A | US-A-4 777 567 (WELKER ET AL)<br>* Spalte 7, Zeilen 30 - 36; Figuren 3-5, 7 * | 8,12-14 | F 21 V<br>F 25 D |
| A | US-A-4 466 697 (DANIEL)<br>* Spalte 7, Zeilen 28 - 38 * * Spalte 5, Zeilen 19 - 22; Figur 2 * | 16,17 | |

Der vorliegende Recherchenbericht wurde für alle Patentansprüche erstellt

| Recherchenort | Abschlußdatum der Recherche | Prüfer |
|---|---|---|
| Den Haag | 06 Juni 91 | VAN OVERBEEKE J.J. |